# EUROPÄISCHE PATENTANMELDUNG

(11) **EP 2 444 666 A1**
(43) Veröffentlichungstag der Anmeldung: **25.04.2012**
(21) Anmeldenummer: 11009487.7
(22) Anmeldetag: 17.12.2009
(51) Int. Cl.: F04B 1/04, F04B 39/00, F16C 19/46, F16C 33/46

(54) **Oszillierende Verdrängervakuumpumpe**

(30) Priorität: 29.12.2008 DE 202008017169 U
(62) Teilanmeldung aus: 09015599.5
(71) Anmelder: VACUUBRAND GMBH + CO KG, 97877 Wertheim (DE)
(72) Erfinder: Dirscherl, Jürgen, Dr., 97892 Kreuzwertheim (DE); Gitmans, Frank, Dr., 30900 Wedemark (DE); Rüster, Gerhard, 97907 Hasloch (DE); Rodemers-Mahler, Manfred, 97877 Wertheim (DE)
(74) Vertreter: Gesthuysen, von Rohr & Eggert

(57) **Zusammenfassung**

Die Erfindung betrifft eine oszillierende Verdrängervakuumpumpe mit einer Antriebseinheit (1), die eine Welle (2) rotierend antreibt und einer Vorrichtung (5), die die rotierende Bewegung der Welle (2) in eine oszillierende Bewegung von Teilen (9) einer Fördereinrichtung zur Förderung von Gasen oder Dämpfen überträgt, wobei die Vorrichtung (5) zur Übertragung der rotierenden Bewegung in eine oszillierende Bewegung mindestens ein Lager (7) mit einem Innenring (10) und einem auf dem Innenring (10) gelagerten Außenring (11) aufweist, wobei der Innenring (10) auf der Welle (2) drehfest angebracht ist. Gekennzeichnet ist die Erfindung dadurch, dass die Lagerung des Außenrings (11) auf dem Innenring (10) als Rollen-, Wälz- oder Kugellager ausgeführt ist und dass dazu zwischen dem Innenring (10) und dem Außenring (11) ein Ring aus abrollenden Lagerelementen (12) angeordnet ist, dass der Innenring (10) selbst exzentrisch ausgebildet ist, so dass die zur Lagerung des Außenringes (11) dienende kreisringförmige äußere Lagerfläche (14) des Innenrings (10) exzentrisch zur Mittelachse der Welle (2) angeordnet ist, und dass der Innenring (10) mit mindestens einem Positioniermittel zur axialen Positionierung auf der Welle (2) versehen ist.

## Beschreibung

Die Erfindung betrifft eine oszillierende Verdrängervakuumpumpe mit den Merkmalen des Oberbegriffs von Anspruch 1 und ein Lager mit den Merkmalen des Oberbegriffs von Anspruch 8.

Oszillierende Verdrängervakuumpumpen wie beispielsweise Membran- oder Kolbenvakuumpumpen oder kombinierte Membran-/Kolbenvakuumpumpen sind bekannt. Bei diesen Pumpentypen wird mindestens ein Schöpfraum durch (jeweils) ein oszillierendes Element periodisch verkleinert und vergrößert. Beim Vergrößern des Schöpfraums wird das zu fördernde Medium (Gas oder Dämpfe) durch mindestens eine Einlaßöffnung in den Schöpfraum hineingesaugt. Beim Verkleinern des Schöpfraums wird das im Schöpfraum befindliche Medium verdichtet und durch mindestens eine Auslaßöffnung ausgestoßen.

Zur Erhöhung des Saugvermögens oder zur Verbesserung des Endvakuums der Vakuumpumpe werden häufig mehrere Zylinder parallel bzw. seriell verbunden.

Derartige Vakuumpumpen sind sehr weit verbreitet zur Erzeugung von Grob-und Feinvakuum für verschiedenste Anwendungen in Industrie und Forschung.

Die oszillierende Bewegung kann durch einen sich hin- und herbewegenden (also im Wesentlichen linearen) Antrieb erzeugt werden. Sehr viel häufiger wird die oszillierende Bewegung aber durch Umsetzung einer rotierenden in eine - zumindest annähernd - lineare Bewegung mittels eines exzentrischen Elements generiert. Nach dem Stand der Technik bekannt ist, auf eine Welle, die mit einem antreibenden Element (z.B. Motor) in Verbindung steht, ein Element mit - relativ zu einem Außenumfang - exzentrischer Bohrung aufzubringen. Dieser Exzenter wird kraftschlüssig und möglichst spielfrei mit der Welle verbunden und rotiert mit der Welle. Auf dem relativ zur Bohrung exzentrisch angeordneten Außenkreis des Exzenters ist ein weiteres Element, das Pleuel, mittels eines Rotationselements drehbar angebracht. Das Pleuel wird durch die Drehung der Welle bzw. des Exzenters in eine oszillierende Bewegung gebracht, wobei das Rotationselement die Rotationskomponente der Bewegung ausgleicht und das Pleuel durch die Membran oder den Kolben in einer zumindest annähernd linearen Bewegung geführt wird.

Die mit der Drehbewegung verbundene Kippbewegung des Pleuels kann durch eine weitere drehbare Anordnung am Pleuel ausgeglichen werden, um eine rein lineare Bewegung, wie sie beispielsweise für Kolbenvakuumpumpen mit linear geführtem Kolben benötigt wird, zu erzeugen.

Das Rotationselement zwischen Exzenter und Pleuel muß die Drehbewegung des Exzenters relativ zum oszillierenden Pleuel ausgleichen und zugleich das Pleuel möglichst spielfrei führen. Meist kommen dafür gleitende Lager oder Kugel- oder Rollenlager zum Einsatz. Bei oszillierenden Vakuumpumpen mit ihren oft hohen einwirkenden Kräften infolge der Vakuumlast auf der Membran bzw. Kolben sind Kugellager gebräuchlich. Die Befestigung des Pleuels auf dem Kugellageraußenring erfolgt meist dadurch, dass das Pleuel das Kugellager auf seinem ganzen Umfang umschließt, das Kugellager also in einer Kugellageraufnahmebohrung des Pleuels sitzt, wodurch eine gleichmäßige Kraftübertragung gewährleistet wird.

Der beschriebene Stand der Technik hat sich in der Praxis bewährt, weist jedoch einige erhebliche Nachteile auf.

So sind an die verschiedenen Teile des Exzenterantriebs hohe Anforderungen an die mechanische Genauigkeit zu stellen, um eine hohe Lebensdauer des Antriebs und geringe Geräuschentwicklung sicherzustellen. Übliche zulässige Fertigungstoleranzen für den Exzenter (Bohrung und Außenumfang), den Kugellagerinnen- und Außenring sowie die Lageraufnahmebohrung des Pleuels liegen in der Größenordnung < 0.01 mm. Dies verursacht erhebliche Kosten für die Fertigung der Einzelteile.

Zudem müssen die verschiedenen Einzelteile spielfrei und kraftschlüssig miteinander verbunden werden. Üblich ist es, den Exzenter auf die Welle aufzupressen, aufzukleben oder mit Hilfe eines weiteren Elements wie beispielsweise einem sogenannten Toleranzring sowie Führungspassungen zu fixieren.

Das Kugellager wird üblicherweise auf den Exzenter aufgeklebt. Das Pleuel wird oft auf den Außenring des Kugellagers geklebt oder über eine Schraubverbindung geklemmt. Alle diese Montagevorgänge verursachen hohen Zeitund Kostenaufwand.

Ein weiterer Nachteil ist der große Platzbedarf für diese Anordnung, da für alle Einzelteile (Exzenter, Kugellagerinnen- und außenring sowie Wandung der Lageraufnahmebohrung im Pleuel) festigkeitsbedingte Mindest-Wandstärken nicht unterschritten werden dürfen.

Ein weiterer Nachteil der bekannten Anordnung ist, dass bei Anordnungen mit mehreren Zylindern der Exzenter entweder so gestaltet werden muß, dass mehrere Kugellager bzw. Pleuel nebeneinander darauf passen, oder mehrere getrennte Exzenter nebeneinander plaziert werden müssen. Bei der ersten Variante können sich je nach relativem Winkelversatz der Zylinderantriebe sehr komplizierte Bauformen des Exzenters ergeben. Bei der zweiten Variante addieren sich Kosten und Platzbedarf für die mehreren Exzenter.

Der Lehre liegt das Problem zugrunde, die bekannte, zuvor erläuterte Verdrängervakuumpumpe hinsichtlich der Anordnung, des Platzbedarfs und der Kosten zu optimieren.

Die zuvor aufgezeigte Problemstellung ist bei einer oszillierenden Verdrängervakuumpumpe mit den Merkmalen des Oberbegriffs von Anspruch 1 durch die Merkmale des kennzeichnenden Teils von Anspruch 1 und bei einem Lager mit den Merkmalen des Oberbegriffs von Anspruch 8 durch die Merkmale des kennzeichnenden Teils von Anspruch 8 gelöst. Bevorzugte Ausgestaltungen und Weiterbildungen sind Gegenstand der Unteransprüche.

Erfindungsgemäß wird die Funktion des exzentrischen Elements einer oszillierenden Verdrängervakuumpumpe in das Lager selbst, und zwar in dessen Innenring integriert. Dazu wird der Innenring exzentrisch ausgebildet, so dass die zur Lagerung des Außenrings auf dem Innenring dienende kreisringförmige äußere Lagerfläche exzentrisch zur Mittelachse der Welle angeordnet ist.

Die Lagerung des Außenrings auf dem Innenring ist in an sich üblicher Weise als Rollen-, Wälz- oder Kugellager ausgeführt, wobei dazu zwischen dem Innenring und dem Außenring ein Ring aus abrollenden Lagerelementen angeordnet ist. Insbesondere wird man von einem Kugellager mit entsprechenden Lagerkugeln in einem Lagerkäfig zwischen Außenring und Innenring ausgehen können.

Erfindungsgemäß wird die Kernfunktion des Exzenters, die bei oszillierenden Verdrängervakuumpumpen separat vom Lager realisiert ist, in das Lager selbst integriert. Der Fertigungsaufwand für einen separaten Exzenter sowie der Montageaufwand für einen solchen Exzenter entfällt. Der Bauraum für eine erfindungsgemäße Einheit ist kleiner als beim Stand der Technik, da der für den separaten Exzenter benötigte Bauraum entfällt.

Der erfindungsgemäße Innenring bietet durch seine exzentrische Gestaltung Möglichkeiten für die Integration weiterer Funktionen. Auch das ergibt weitere Vorteile der erfindungsgemäßen Verdrängervakuumpumpe.

Normalerweise wird der Innenring einteilig ausgeführt sein. Grundsätzlich ist es aber auch möglich, den Innenring selbst mehrteilig auszuführen. Dies ist insbesondere dann zweckmäßig, wenn der Innenring in unterschiedlichen Bereichen aus unterschiedlichen Werkstoffen bestehen soll. Insbesondere gilt dies für eine Kombination von Metall und Kunststoff oder Metall und Keramik für den Innenring,

Nach einer bevorzugten Lehre der Erfindung ist vorgesehen, dass der Innenring mit Mitteln zur relativ fixierten Winkelanordnung von auf der Welle benachbart angeordneten Lagern versehen ist. Die Mittel zur relativen Winkelanordnung können beispielsweise als Indexierbohrungen und Indexierstifte, die in die Indexierbohrungen eingesteckt werden, ausgeführt sein. Bevorzugt sind mehrere Indexierbohrungen vorgesehen, so dass ein einziges Lager für unterschiedliche relative Winkellagen der Exzentrizität der angetriebenen Bauteile (Kolben oder Membranen) verwendet werden kann. Man kann hier an einer Reihenanordnung ohne Versatz, an eine Boxer-Anordnung mit gegenläufiger Bewegung der Bauteile oder an eine sonstige Konstruktion mit beliebigem Winkelversatz der Bauteile denken. Letztgenannte Konstruktion könnte optimal möglicherweise mit einem Winkelversatz von jeweils 120° realisiert werden.

Nach einer weiter bevorzugten Ausführungsform kann man auch vorsehen, dass der Innenring mit Mitteln zum winkelgenauen Anbau mindestens eines Gegengewichts versehen ist. Auch diese Mittel können von den Indexierbohrungen und entsprechenden Befestigungsstiften gebildet werden. Ein solches Gegengewicht oder mehrere Gegengewichte sind zum Massenausgleich der mit teilweise hoher Geschwindigkeit rotierenden Massen zweckmäßig.

Grundsätzlich ist es auch möglich, die erfindungsgemäße Verdrängervakuumpumpe dadurch weiter auszugestalten, dass der Innenring mit mindestens einem Abstandshalter zum Innenring eines benachbarten Lagers versehen oder ausgebildet ist. Dadurch kann auf separate Abstandshalter zwischen den Lagern verzichtet werden. Dies spart Kosten für Fertigung und Montage des separaten Abstandshalters. Auch ist weniger mit einer Geräuschentwicklung durch Bewegungen des Abstandshalters relativ zu den Lagern zu rechnen.

Ist die Distanz zwischen den Lagern größer als man sie mit einem in den Innenring integrierten Abstandshalter vernünftigerweise überbrücken kann, so kann man auch im erfindungsgemäßen System zwischen jeweils zwei Lagern einen separaten Abstandshalter anordnen. Eine Alternative dazu ist eine Distanzhülse als Abstandshalter zwischen den Lagern, die wiederum ihrerseits an den Indexierbohrungen montiert ist. Auch hier ist eine einfachere Fertigung gewährleistet und die Gefahr von Geräuschentwicklungen durch Bewegungen des Abstandshalters relativ zu den Lagern oder der Welle ist reduziert.

Auch der Außenring des Lagers der erfindungsgemäßen Verdrängervakuumpumpe kann zusätzliche Funktionen übernehmen. Insbesondere kann man vorsehen, dass der Außenring mit einer Halterung für ein Übertragungsbauteil versehen ist. Man kann also das Pleuel, das als Übertragungsbauteil klassischer Art dient, hier unmittelbar am Außenring anbringen. Auf eine Lageraufnahmebohrung im Pleuel kann man so verzichten. Dazu kann beispielsweise am Außenring eines erfindungsgemäß realisierten Lagers eine Einschraubfläche für ein konstruktiv stark vereinfachtes Pleuel vorgesehen sein. Im Grundsatz ist es auch möglich, dass der Außenring insgesamt selbst einstückig als Pleuel ausgeführt ist und dessen Funktion übernimmt.

Es ist zweckmäßig, dass die Halterung am Außenring sich nicht über mehr als einen Halbkreis der Umfangsfläche erstreckt.

Gegenstand der Erfindung ist auch ein Lager für eine Verdrängervakuumpumpe als solches mit den Merkmalen, die zuvor im einzelnen erläutert worden sind.

Im folgenden wird die Erfindung anhand einer sowohl den Stand der Technik als auch Ausführungsbeispiele darstellenden Zeichnung näher erläutert. In der Zeichnung zeigt:
- Fig. 1: im Schnitt und schematisch dargestellt eine oszillierende Verdrängervakuumpumpe, wie sie aus dem Stand der Technik bekannt ist,
- Fig. 2: ein erstes Ausführungsbeispiel eines erfindungsgemäßen Lagers einer erfindungsgemäßen Verdrängervakuumpumpe,
- Fig. 3: ein zweites Ausführungsbeispiel eines erfindungsgemäßen Lagers einer erfindungsgemäßen Verdrängervakuumpumpe,
- Fig. 4: in perspektivischer Ansicht ein drittes Ausführungsbeispiel eines erfindungsgemäßen Lagers einer erfindungsgemäßen Verdrängervakuumpumpe,
- Fig. 5: in perspektivischer Ansicht, stark vereinfacht, ein viertes Ausführungsbeispiel eines erfindungsgemäßen Lagers einer erfindungsgemäßen Verdrängervakuumpumpe,
- Fig. 6: im Schnitt in einer Fig. 1 ähnlichen Darstellung ein bevorzugtes Ausführungsbeispiel einer erfindungsgemäßen zweizylindrigen oszillierenden Verdrängervakuumpumpe,
- Fig. 7: im Schnitt in einer Fig. 1 ähnlichen Darstellung ein bevorzugtes Ausführungsbeispiel einer erfindungsgemäßen vierzylindrigen oszillierenden Verdrängervakuumpumpe,
- Fig. 8: im Schnitt in einer Fig, 1 ähnlichen Darstellung ein bevorzugtes Ausführungsbeispiel einer erfindungsgemäßen zweizylindrigen oszillierenden Verdrängervakuumpumpe und
- Fig. 9: das Ausführungsbeispiel aus Fig. 8 in einer dreidimensionalen Darstellung.

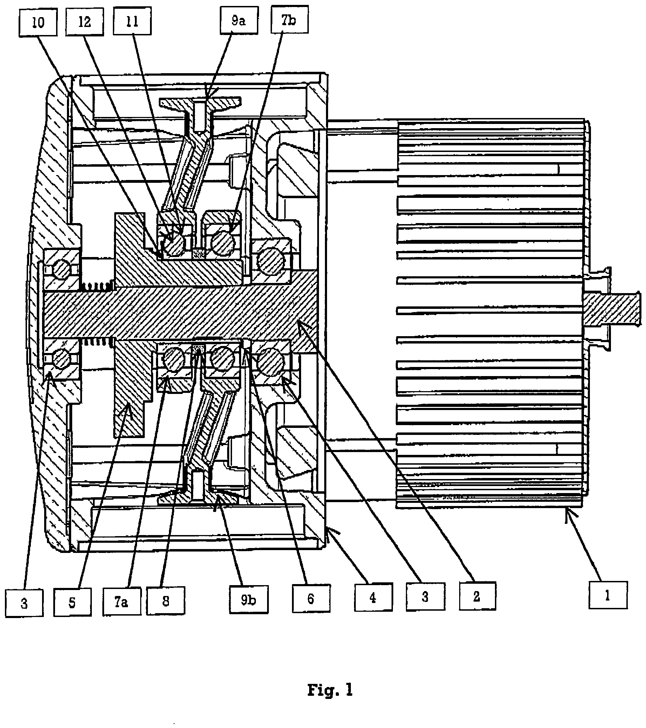

Fig. 1 zeigt im Schnitt die Grundkonstruktion einer zweizylindrigen oszillierenden Verdrängervakuumpumpe.

Ein Motor in einem Motorgehäuse 1 treibt eine Welle 2 an. Die Welle 2 ist mittels Lagern 3 in einem Gehäuse 4 drehbar gelagert. Auf der Welle 2 ist eine Vorrichtung 5 zur Übertragung der rotierenden Bewegung der Welle 2 in eine oszillierende Bewegung mindestens eines angetriebenen Bauteils der Verdrängervakuumpumpe angebracht. Bei dieser Vorrichtung 5 handelt es sich hier um einen Exzenter mit integriertem Gegengewicht. Dieses Gegengewicht erkennt man am Exzenter 5 integriert ausgeformt links benachbart zum Lager 3 der Welle 2. Ein Distanzring 6 erleichtert die korrekte Positionierung des Exzenters 5 auf der Welle 2.

Im dargestellten Ausführungsbeispiel des Standes der Technik befindet sich auf dem exzentrischen Außenumfang der Vorrichtung 5 (Exzenter) ein dort drehfest angebrachtes, beispielsweise aufgeklebtes Lager 7a und ein weiteres entsprechendes Lager 7b. Der axiale Abstand der Lager 7a, 7b wird durch einen Distanzring 8 auf der Welle 2 definiert. Auf dem Außenumfang des Lagers 7a ist mit einem Aufnahmeauge ein Pleuel 9a drehfest angebracht, insbesondere hier angeklebt. Entsprechend sitzt ein Pleuel 9b auf dem Außenumfang des Lagers 7b. Das jeweilige Pleuel 9a; 9b wird von einer zugeordneten, am Außenumfang eingespannten Membran einer Membranvakuumpumpe oder einem Kolben einer Kolbenvakuumpumpe geführt. Diese angetriebenen Bauteile sind in Fig. 1 nicht dargestellt. Das gleiche gilt für sonstige Komponenten zur Gasförderung.

Eine oszillierende Verdrängervakuumpumpe gemäß der Erfindung unterscheidet sich von einer zuvor beschriebenen oszillierenden Verdrängervakuumpumpe des Standes der Technik in der Konstruktion des Lagers 7. In Fig. 1 ist am links dargestellten Lager 7a eingezeichnet, dass ein solches Lager 7 einen Innenring 10 und einen auf dem Innenring 10 gelagerten Außenring 11 aufweist. Das Lager 7 ist mit dem Innenring 10 auf der Welle 2 drehfest angebracht.

Die Lagerung des Außenrings 11 auf dem Innenring 10 kann alle sachgerechten konstruktiven Formen annehmen. Die einfachste Form der Lagerung ist ein Gleitlager. Das ist aber relativ kompliziert herzustellen und für normale Anwendungsfälle nicht optimal.

Ein typisches Lager ist ein Rollenlager, ein Wälzlager oder, insbesondere, ein Kugellager. Dargestellt ist in Fig. 1 ein Kugellager, bei dem zwischen dem Innenring 10 und dem Außenring 11 ein Ring aus abrollenden Lagerelementen 12, hier den Lagerkugeln, angeordnet ist. Weggelassen zur vereinfachten Darstellung ist der Kugelkäfig, der die Lagerelemente 12 zwischen Innenring 10 und Außenring 11 führt.

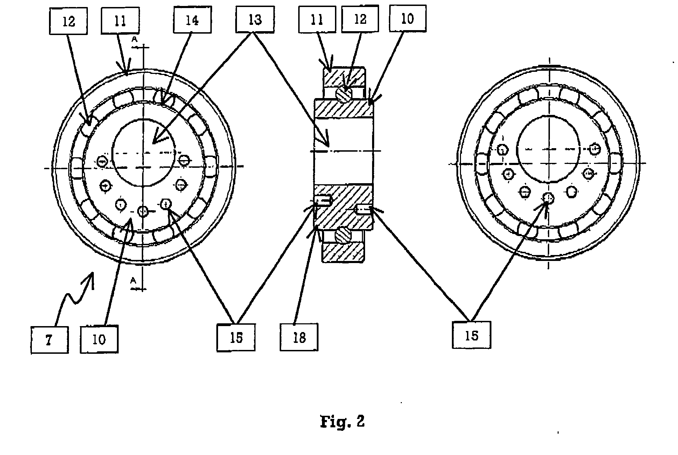

Fig. 2 zeigt schematisch links eine Ansicht eines Lagers 7, in der Mitte einen Schnitt entsprechend A-A des links dargestellten Lagers 7 und rechts eine Ansicht des Lagers 7 von der anderen Seite aus.

Das Lager 7 hat hier den bereits beschriebenen Innenring 10 und den darauf gelagerten Außenring 11. Der Innenring 10 hat eine hier kreisförmige Wellenaufnahme 13. Der Innenring 10 selbst ist exzentrisch ausgebildet, d. h. die Wellenaufnahme 13 liegt exzentrisch im Innenring 10 und damit exzentrisch zu der der Lagerung des Außenrings 11 dienenden kreisringförmigen äußeren Lagerfläche 14 des Innenrings 10. Ist das Lager 7 auf einer Welle 2 montiert, so liegt die zur Lagerung des Außenringes 11 dienende kreisringförmige äußere Lagerfläche 14 des Innenrings 10 exzentrisch zur Mittelachse der Welle 2. Dadurch gewinnt der Innenring 10 des Lagers 7 gleichzeitig die Funktion eines Exzenters.

Auch in Fig. 2 erkennt man, dass das Lager 7 hier einen Ring aus abrollenden Lagerelementen 12 (Kugeln) aufweist. Der Lagerkäfig ist auch hier aus zeichnerischen Gründen weggelassen worden.

Im dargestellten Ausführungsbeispiel ist der Innenring 10 einteilig ausgeführt. Er kann jedoch auch mehrteilig ausgeführt sein, was bei unterschiedlichen Werkstoffen eine besondere Bedeutung haben kann.

Das dargestellte und bevorzugte Ausführungsbeispiel zeigt, dass der Innenring 10 mit Mitteln 15 zur relativ fixierten Winkelanordnung von auf der Welle 2 benachbart angeordneten Lagern 7 versehen ist. Diese Mittel 15 sind im dargestellten Ausführungsbeispiel als Indexierbohrungen ausgeführt. In der Darstellung der Rückseite rechts in Fig. 2 kann man erkennen, dass die Indexierbohrungen 15 auf der Rückseite an anderer Stelle angeordnet sein können als die Indexierbohrungen 15 an der in Fig. 2 links dargestellten Vorderseite.

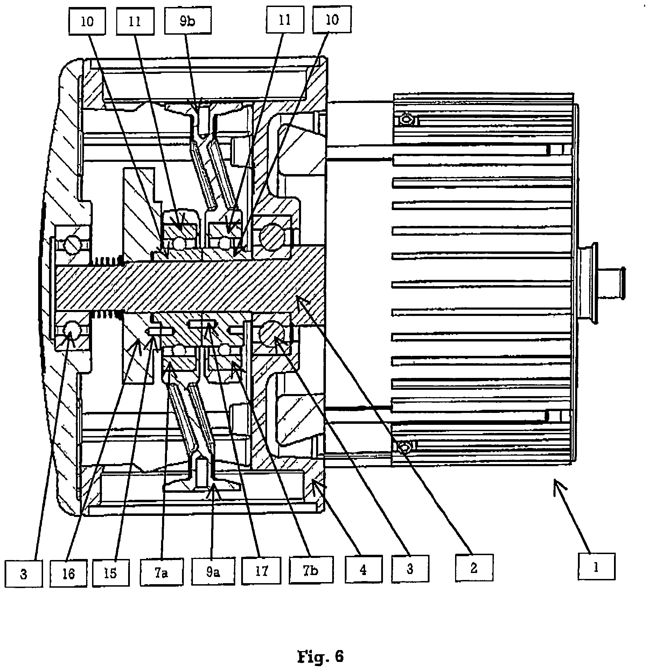

Grundsätzlich ist es zweckmäßig, den Innenring 10 auch mit Mitteln 15 zum winkelgenauen Anbau mindestens eines Gegengewichts 16 zu versehen. Ein solches Gegengewicht 16 zeigt beispielsweise Fig. 6.

Im dargestellten Ausführungsbeispiel sind die Mittel 15 zur relativ fixierten Winkelanordnung und die Mittel 15 zum winkelgenauen Anbau ein und dasselbe, nämlich im dargestellten Ausführungsbeispiel Indexierbohrungen 15. Nicht dargestellt in Fig. 2, jedoch dargestellt beispielsweise in Fig. 6, sind zu den Indexierbohrungen 15 passende Indexierstifte 17, die natürlich auch zu den Mitteln zu zählen sind.

Das in Fig. 2 dargestellte Ausführungsbeispiel zeigt den Innenring 10 axial mit größerer Abmessung als den Außenring 11. Der Innenring 10 steht also hier beidseitig über den Außenring 11 über. Dadurch kann die Funktion eines Abstandshalters 18 realisiert werden. Der Abstandshalter 18 definiert den axialen Abstand der Außenringe 11 zweier benachbarter Lager 7.

Wenn im Text hier die Terminologie "versehen ist" verwendet wird, so bedeutet das sowohl eine mehrteilige als auch, wie in Fig. 2 gezeigt, eine einteilige Ausführung.

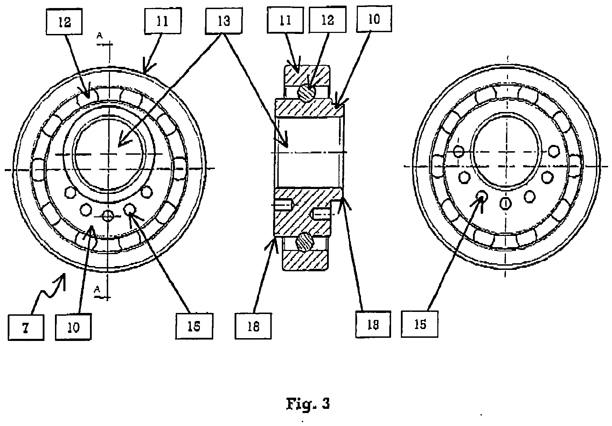

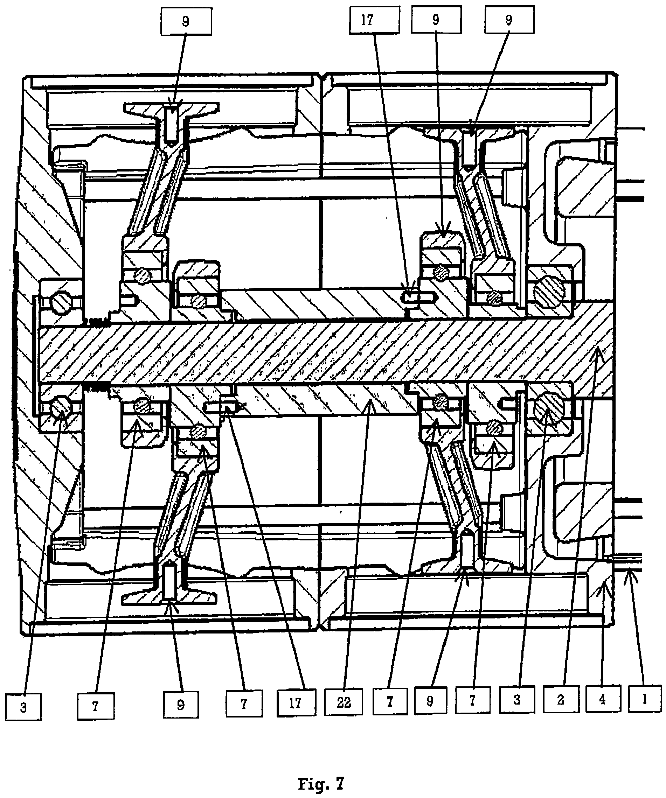

Das in Fig. 3 dargestellte Ausführungsbeispiel zeigt eine gegenüber Fig. 2 leicht modifizierte Ausführungsform. Der Abstandshalter 18 ist hier an den beiden Seiten unterschiedlich. In Fig. 3 in der Mitte ist der Abstandshalter 18 rechts konzentrisch zur Wellenaufnahme 13 ausgeführt. Diese Konstruktion dient entweder zur Abstandshaltung in entsprechenden Einbausituationen und erspart einen dort sonst erforderlichen separaten Distanzring oder zur Führung einer zwischen den so ausgestalteten Lagern 7 angebrachten Distanzhülse als separater Abstandshalter. Dazu mehr bei Fig. 7.

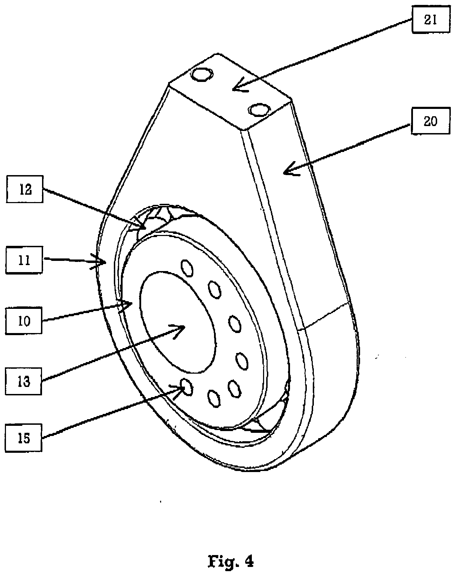

Im Ausführungsbeispiel von Fig. 4 ist ein Lager 7 in perspektivischer Ansicht, stark vereinfacht dargestellt. Wieder sind dieselben Bezugszeichen wie in den bisherigen Figuren verwendet werden. Das besondere an dieser Ausgestaltung ist, dass der Außenring 11 mit einer Halterung 20 für ein in Fig. 4 nicht dargestelltes Übertragungsbauteil 9 (Pleuel) versehen ist. Die Halterung 20 ist hier als asymmetrische Aufweitung des Außenrings 11 ausgeführt und erstreckt sich am Außenring 11 über weniger als einen Halbkreis. An der Halterung 20 befindet sich eine Befestigungsfläche 21 für das Übertragungsbauteil 9 (Pleuel o. dgl.). An der Befestigungsfläche 21 befinden sich hier zwei Gewindebohrungen als Befestigungsmöglichkeit. Dadurch entfällt die Notwendigkeit eines Aufnahmeauges am Pleuel 9.

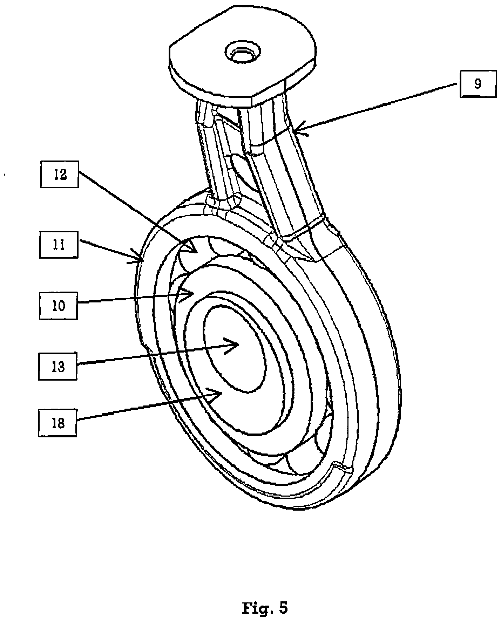

Fig. 5 zeigt in einer Fig. 4 entsprechenden perspektivischen Darstellung ein Lager 7 mit einem daran angebrachten kompletten Übertragungsbauteil 9 in Form eines Pleuels. Dieses kann einstückig am Außenring 11 ausgebildet oder mehrteilig ausgeführt und dort angebracht sein. Man erkennt hier im Übrigen auch wieder einen integrierten Abstandshalter 18 am Innenring 10.

Fig. 6 zeigt in einer vereinfachten, schematischen Schnittdarstellung eine zweizylindrige oszillierende Verdrängervakuumpumpe gemäß der Erfindung in einer Fig. 1 ähnlichen Darstellung. Die Bezugszeichen sind entsprechend angepaßt.

Im dargestellten Ausführungsbeispiel treibt die Antriebseinheit 1 die Welle 2 rotierend an, die mittels Lagern 3 im Gehäuse 4 gelagert ist. Auf der Welle 2 sind zwei Lager 7 mit exzentrischer Wellenaufnahme 13 direkt drehfest angebracht. Dazu sind die Innenringe 10 der Lager 7a, 7b im dargestellten Ausführungsbeispiel auf der Welle 2 verklebt. Die Position der beiden Lager 7a, 7b wird in diesem Beispiel durch beidseitige, jeweils asymmetrische Überstände definiert, die als integrierte axiale Abstandshalter 18 axial sowohl relativ zum rechts erkennbaren Lager 3 der Welle 2 als auch relativ zueinander dienen. Die relative Winkelanordnung der Innenringe 10 der beiden Lager 7a, 7b zueinander wird durch einen Indexierstift 17 fixiert, der dazu in jedem der beiden Innenringe 10 der aneinander angrenzenden Lager 7a, 7b in eine entsprechende Indexierbohrung 15 eingreift. Ein weiterer solcher Indexierstift 17 in Verbindung mit einer entsprechenden Indexierbohrung 15 im Innenring 10 des links angeordneten Lagers 7a dient dem winkelgenauen Anbau eines Gegengewichts 16. Auf den Außenringen 11 der Lager 7a, 7b sind Pleuel 9a, 9b als Vorrichtungen zur Übertragung der rotierenden Bewegung der Welle 2 angeordnet. Die von diesen Pleueln 9a, 9b angetriebenen Bauteile sind hier der Einfachheit halber weggelassen (Membran oder Kolben).

Fig. 7 zeigt eine Schnittdarstellung entsprechender, vereinfachter Art durch eine vierzylindrige oszillierende Verdrängervakuumpumpe gemäß der Erfindung. Rechts ist die Antriebseinheit 1 angedeutet, aber nicht weiter eingezeichnet, Von dieser wird die Welle 2 rotierend angetrieben. Wie mehrfach erläutert, ist auch hier die Welle 2 in zwei Lagern 3 im Gehäuse 4 gelagert. Jeweils zwei benachbarte Fördervolumina werden hier mit 180° Versatz (Boxeranordnung) betrieben. Es gibt zwei solcher Baugruppen auf der Welle 2.

Auf der Welle 2 sind vier Lager 7 mit ihren Innenringen 10 drehfest angebracht. Die Innenringe 10, die Außenringe 11 und die Lagerelemente 12 sind hier der besseren Übersichtlichkeit wegen nicht mit Bezugszeichen versehen worden.

Die relative Position benachbarter Lager 7 wird in diesem Ausführungsbeispiel durch beidseitige, jeweils asymmetrische Überstände gewährleistet, die als integrierte Abstandshalter 18 sowohl relativ zu dem rechts erkennbaren Lager 3 der Welle 2 im Gehäuse 4 als auch zueinander dienen. Ein solcher Abstandshalter 18, der hier speziell als Positioniermittel zur axialen Positionierung des rechts befindlichen Lagers 7 auf der Welle 2 dient, ist in Fig. 7 mit dem Bezugszeichen identifiziert.

Der axiale Abstand der beiden Paare von Lagern 7 ist im dargestellten Ausführungsbeispiel durch eine Distanzhülse 22 gebildet, die als Abstandshalter in axialer Richtung dient. Die Distanzhülse 22 liegt auf entsprechenden axialen Überständen der jeweils angrenzenden Innenringe 10 auf. Die korrekte Winkelausrichtung der beiden Paare von Lagern 7 wird auch hier durch Indexierstifte 17 erreicht, die in entsprechende Indexierbohrungen 15 hier in der Distanzhülse 22 und den benachbarten Innenringen 10 eingreifen. Für die beiden Innenringe 10 der Lager 7 einer Gruppe gelten entsprechende Mittel 15 zur relativ fixierten Winkelanordnung wie bei den anderen Ausnmrungsbeispielen. Sie sind hier in der Zeichnung nicht zu erkennen, da sie sich außerhalb der Schnittebene befinden.

Auf den Außenringen 11 der Lager 7 sind entsprechende Teile 9 der Fördereinrichtung angebracht, hier in der üblichen Weise als Pleuel mit Lageraufnahmebohrung ausgeführt. Insoweit ist die Konstruktion ähnlich wie bei den voranstehend beschriebenen Ausführungsbeispielen. Auch hier sind die Übertragungsbauteile 9 (Pleuel) am Außenring 11 einstückig ausgebildet.

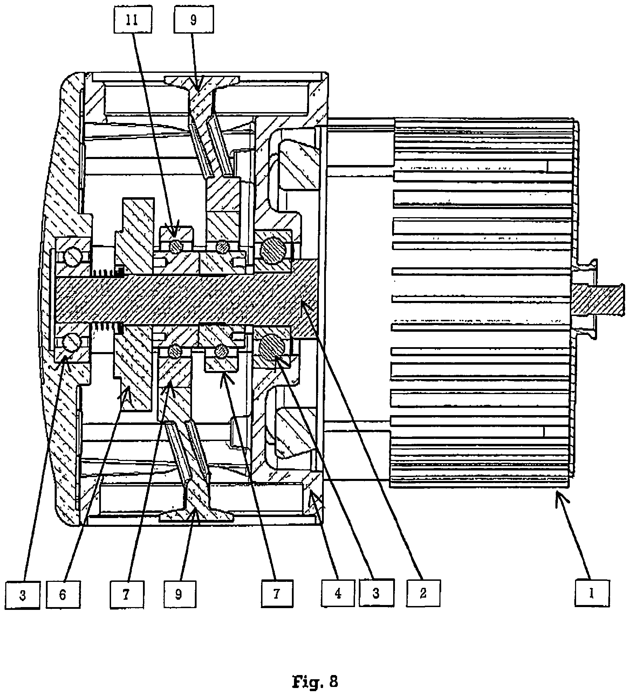

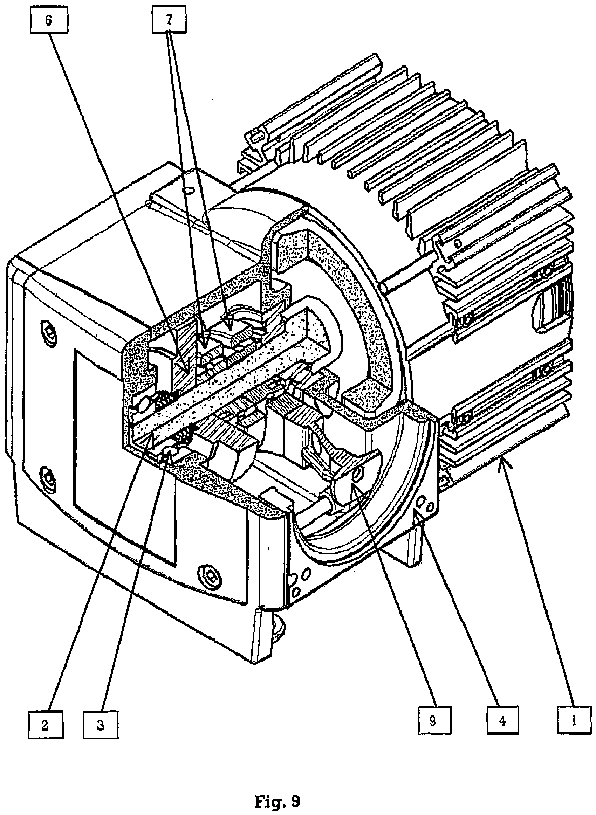

Fig. 8 und 9 zeigen ein und dasselbe Ausführungsbeispiel zum einen in einem Fig. 1 ähnlichen Schnitt, zum anderen in einer perspektivischen, gewissermaßen dreidimensionalen Darstellung. Hier handelt es sich um eine erfindungsgemäße zweizylindrige Verdrängervakuumpumpe.

Hier sind die als Übertragungsbauteile 9 dienenden Pleuel mittels jeweils einer Halterung, wie in Fig. 4 dargestellt (Halterung 20), an den Außenringen 11 der Lager 7 angebracht. Die Position der hier dargestellten zwei Lager 7 wird hier durch beidseitige, jeweils asymmetrisch angebrachte Abstandshalter 18 realisiert. Die Anordnungen entsprechen weitgehend den voranstehenden Erläuterungen zu anderen Ausführungsbeispielen.

Gegenstand der Erfindung ist nicht nur eine Verdrängervakuumpumpe insgesamt, sondern sind auch Lager erfindungsgemäßer Bauart für eine solche Verdrängervakuumpumpe.

## Patentansprüche

1. Oszillierende Verdrängervakuumpumpe mit
einer Antriebseinheit (1), die eine Welle (2) rotierend antreibt und
einer Vorrichtung (5) die die rotierende Bewegung der Welle (2) in eine oszillierende Bewegung von Teilen (9) einer Fördereinrichtung zur Förderung von Gasen oder Dämpfen überträgt,
wobei die Vorrichtung (5) zur Übertragung der rotierenden Bewegung in eine oszillierende Bewegung mindestens ein Lager (7) mit einem Innenring (10) und einem auf dem Innenring (10) gelagerten Außenring (11) aufweist, wobei der Innenring (10) auf der Welle (2) drehfest angebracht ist,
**dadurch gekennzeichnet,**
**dass** die Lagerung des Außenrings (11) auf dem Innenring (10) als Rollen-, Wälz- oder Kugellager ausgeführt ist und dass dazu zwischen dem Innenring (10) und dem Außenring (11) ein Ring aus abrollenden Lagerelementen (12) angeordnet ist,
**dass** der Innenring (10) selbst exzentrisch ausgebildet ist, so dass die zur Lagerung des Außenringes (11) dienende kreisringförmige äußere Lagerfläche (14) des Innenrings (10) exzentrisch zur Mittelachse der Welle (2) angeordnet ist, und
**dass** der Innenring (10) mit mindestens einem Positioniermittel zur axialen Positionierung auf der Welle (2) versehen ist.

2. Verdrängervakuumpumpe nach Anspruch 1, **dadurch gekennzeichnet,**
**dass** der Innenring (10) selbst mehrteilig ausgeführt ist.

3. Verdrängervakuumpumpe nach einem der Ansprüche 1 oder 2, **dadurch gekennzeichnet,**
**dass** der Innenring (10) mit mindestens einem Abstandshalter (18) zum Innenring (10) eines benachbarten Lagers (7) versehen oder ausgebildet ist.

4. Verdrängervakuumpumpe nach einem der Ansprüche 1 bis 3, **dadurch gekennzeichnet,**
**dass** zwischen jeweils zwei Lagern (7a, 7b) ein separater Abstandshalter (22) angeordnet ist.

5. Verdrängervakuumpumpe nach Anspruch 4, **dadurch gekennzeichnet,**
**dass** der Innenring (10) mit Mitteln (15) zur relativ fixierten Winkelanordnung von auf der Welle (2) benachbart angeordneten Lagern (7a, 7b) versehen ist und der Abstandshalter (22) an den Mitteln (15) zur relativ fixierten Winkelanordnung montiert ist.

6. Verdrängervakuumpumpe nach einem der Ansprüche 1 bis 5, **dadurch gekennzeichnet,**
**dass** der Außenring (11) mit einer Halterung (20) für ein Übertragungsbauteil (9) versehen ist.

7. Verdrängervakuumpumpe nach Anspruch 6, **dadurch gekennzeichnet,**
**dass** die Halterung (20) für das Übertragungsbauteil (9) sich am Außenring (11) über weniger als einen Halbkreis erstreckt.

8. Lager für eine Verdrängervakuumpumpe mit einem Innenring (10) und einem auf dem Innenring (10) gelagerten Außenring (11),
wobei der Innenring (10) auf einer Welle der Verdrängervakuumpumpe drehfest anbringbar ist und dazu eine Wellenaufnahme (13) aufweist.
**dadurch gekennzeichnet,**
**dass** die Lagerung des Außenrings (11) auf dem Innenring (10) als Rollen-, Wälz- oder Kugellager ausgeführt ist und dazu zwischen dem Innenring (10) und dem Außenring (11) ein Ring aus abrollenden Lagerelementen (12) angeordnet ist,
**dass** der Innenring (10) selbst exzentrisch ausgebildet ist, so dass die zur Lagerung des Außenringes (11) dienende kreisringförmige äußere Lagerfläche (14) des Innenrings (10) exzentrisch zur Mittelachse der Welle (2) angeordnet ist, und
**dass** der Innenring (10) mit mindestens einem Positioniermittel zur axialen Positionierung auf der Welle (2) versehen ist.

9. Lager nach Anspruch 8, **gekennzeichnet durch**
die Merkmale des kennzeichnenden Teils eines oder mehrerer der Ansprüche 2 bis 7.
